# EUROPEAN PATENT APPLICATION

(11) **EP 4 760 516 A1**
(43) Date of publication of application: **17.06.2026**
(21) Application number: 25188738.6
(22) Date of filing: 10.07.2025
(51) Int. Cl.: G06F 13/28

(54) **DEVICE AND METHOD WITH DIRECT MEMORY ACCESS (DMA) MANAGEMENT**

(30) Priority: 10.12.2024 KR 20240182749
(71) Applicant: Samsung Electronics Co., Ltd., Suwon-si, Gyeonggi-do 16677 (KR)
(72) Inventor: Kang, Mincheol, 16678 Suwon-si, Gyeonggi-do (KR); Park, Sungjoon, 16678 Suwon-si, Gyeonggi-do (KR); Lee, Yong In, 16678 Suwon-si, Gyeonggi-do (KR); Jung, Changue, 16678 Suwon-si, Gyeonggi-do (KR); Joo, Kyung-no, 16678 Suwon-si, Gyeonggi-do (KR)
(74) Representative: Grünecker Patent- und Rechtsanwälte PartG mbB

(57) **Abstract**

A direct memory access (DMA) management device and an operating method thereof are provided. The DMA management device is configured to decode a descriptor received from processors sharing a memory and divide the descriptor into sub-descriptors and transmit the sub-descriptors to DMA engines and transmit a result of parallel processing to a switches through at least one network port.

## Description

### BACKGROUND

### 1. Field

The following description relates to a method and device with direct memory access (DMA) management.

### 2. Description of Related Art

As artificial intelligence (Al) technologies that apply a large language model (LLM) are developed, servers and/or data centers for Al systems that provide Al services to many users simultaneously in various fields are being built. Al systems may need to be able to train a large amount of data simultaneously and may also need to infer and serve the trained data when users use the Al systems. Accordingly, an Al system may include multiple processors that may operate Al applications and memories that may store and quickly process large amounts of data. In addition, since the Al applications require more data, a method of connecting the multiple processors through a multi-port network is being developed.

The above description is information the inventor(s) acquired during the course of conceiving the present disclosure, or already possessed at the time, and is not necessarily art publicly known before the present application was filed.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one general aspect, a direct memory access (DMA) management device is configured to decode a descriptor received from any of multiple processors that are sharing a memory and divide the descriptor into sub-descriptors and transmit the sub-descriptors to DMA engines and transmit a result of parallel processing to multiple switches through at least one network port.

The DMA management device may include a first decoder configured to decode the descriptor, which is received through a work queue and a sub-descriptor generator configured to divide the descriptor into the sub-descriptors based on the result of the decoding and generate metadata corresponding to the sub-descriptors.

The DMA management device may further include a scheduler configured to schedule the sub-descriptors amongst the DMA engines according to statuses of the respective DMA engines, a second decoder configured to decode whether processing of the sub-descriptors scheduled amongst the DMA engines is completed and transmit, to the scheduler, an indication that an error that has occurred during a processing process of the sub-descriptors, or a completion checker configured to check whether processing of each of the sub-descriptors is completed and store a result of the checking in a completion queue.

The first decoder may be configured to decode a source address, a destination address, and a transfer size included in the descriptor and store a completion status of the decoding in a completion record address included in the descriptor.

The sub-descriptor generator may be configured to determine whether to divide the descriptor into the sub-descriptors or transmit the descriptor to an available DMA engine based on comparing the threshold size to a threshold.

The sub-descriptor generator may be configured to determine a subset size of the sub-descriptors based on a number of available DMA engines among the DMA engines, determine the source address and the destination address by adding an offset equal to the subset size, and generate the sub-descriptors by changing the completion record address into a sub-completion record address.

The sub-descriptor generator may be configured to compare a number of the sub-descriptors to a number of available DMA engines and in response to the number of the sub-descriptors being greater than or equal to the number of available DMA engines, transmit, to the completion checker, the metadata, the metadata including identification information of the descriptor, a start address and an end address of the sub-completion record, or the number of the sub-descriptors.

The DMA management device may further include an address translator configured to convert a source address or a destination address identified through the decoding of the descriptor.

The address translator may be configured to set the source address and the destination address according to a target system on chip (SoC), compare the transfer size to a sum of offsets of the source address and the destination address set according to the target SoC, and according to a result of the comparing, set the transfer size by adding an offset corresponding to an address of the target SoC to the transfer size.

The scheduler may be configured to determine status information of the plurality of DMA engines as one status of a busy status, a fault status, an error status, a free status, and a retry status, and assign the sub-descriptors to an available DMA engine according to the determined status.

The scheduler may be configured to monitor statuses of the respective DMA engines based on the status information, which corresponds to the DMA engines, stored in a sub-completion record address.

The second decoder may be configured to transmit, to the scheduler, the sub-completion record related to processing completion of the sub-descriptors, information about the error that has occurred during the processing process of the sub-descriptors, or the status information of the DMA engines.

The second decoder may include a sub-completion table including information of the sub-completion record and the information of the sub-completion record is accessible through a sub-completion record address, which is a completion record address included in the sub-descriptors.

The second decoder may be configured to confirm whether processing of the sub-descriptors is completed by looking up the sub-completion table.

The completion checker may be configured to synthesize the sub-completion records in which processing is completed in each of the sub-descriptors and determine whether processing of the sub-descriptors is normally terminated and update the completion queue according to a result of the determining, thereby storing completion record information in a completion record address corresponding to the descriptor.

The completion checker may include a completion check table including identification information of the descriptor, a completion record address corresponding to the descriptor, a start address of the completion record address, an end address of the completion record address, a bitmap representing a completion status corresponding to the sub-descriptors, or a number of sub-descriptors.

The completion checker may be configured to calculate an offset of a sub-completion bitmap included in the completion check table using the number of the sub-descriptors for which processing has completed and a sub-completion record address corresponding to the sub-descriptors in which processing is completed, based on whether a sub-completion address corresponding to the sub-descriptors for which processing has completed is included in the start address of the completion record address and the end address of the completion record address, change information of the sub-completion bitmap according to the offset, and store completion information corresponding to at least a part of the sub-completion bitmap in the completion record address corresponding to the identification information of the descriptor according to whether the at least a part of the sub-completion bitmap is set.

The processors and the DMA management device may be included in an SoC, and the DMA management device may be connected to each of the processors and each of the DMA engines.

Each DMA engine may be configured to transmit the result of the parallel processing to the plurality of switches through a single network port shared by the DMA engines or transmit the result of the parallel processing to the switches through network ports respectively corresponding to the DMA engines.

In another general aspect, a method of operating a DMA management device includes receiving a descriptor from processors sharing a memory, dividing the descriptor into sub-descriptors based on a result of decoding the descriptor, scheduling the sub-descriptors to an available DMA engine among the DMA engines according to statuses of the respective DMA engines, and transmitting a result of processing corresponding to the descriptor to switches through at least one network port based on whether processing of the scheduled sub-descriptors is completed.

Other features and aspects will be apparent from the following detailed description, the drawings, and the claims.

### BRIEF DESCRIPTION OF THE DRAWINGS

FIG. 1 illustrates an example of an operation of a computer system including a direct memory access (DMA) management device, according to one or more embodiments.
FIG. 2 illustrates an example of a DMA management device, according to one or more embodiments.
FIG. 3 illustrates an example of a format of a descriptor, according to one or more embodiments.
FIG. 4 illustrates an example of an operation of a sub-descriptor generator, according to one or more embodiments.
FIG. 5 illustrates an example of a method of operating a sub-descriptor generator, according to one or more embodiments.
FIG. 6 illustrates an example of a method of operating a sub-descriptor generator when an address translator is used, according to one or more embodiments.
FIG. 7A illustrates an example of a completion record, according to one or more embodiments.
FIG. 7B illustrates an example of a sub-completion table, according to one or more embodiments.
FIG. 8 illustrates an example of a method of operating a completion checker, according to one or more embodiments.
FIG. 9 illustrates an example of a completion check table included in a completion checker, according to one or more embodiments.
FIG. 10 illustrates an example of a structure of a system-on-chip (SoC) including a DMA management device and a configuration of a multi-port network, according to one or more embodiments.
FIG. 11 illustrates an example of a configuration of a multi-port network system in a multi-layer environment, according to one or more embodiments.
FIGS. 12A and 12B illustrate an example of maximizing bandwidth utilization by dividing sub-descriptors by the number of DMA engines, according to one or more embodiments.
FIGS. 13A and 13B illustrate an example of transmitting data to different SoCs through multiple DMA engines by an address translator, according to one or more embodiments.
FIGS. 14A, 14B, and 14C illustrate an example of using multiple processors, according to one or more embodiments.
FIG. 15 illustrates an example of a timing diagram when multiple DMA engines are driven without using a DMA management device and when multiple DMA engines are driven using a DMA management device, according to one or more embodiments.
FIG. 16 illustrates an example of a method of operating a DMA management device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

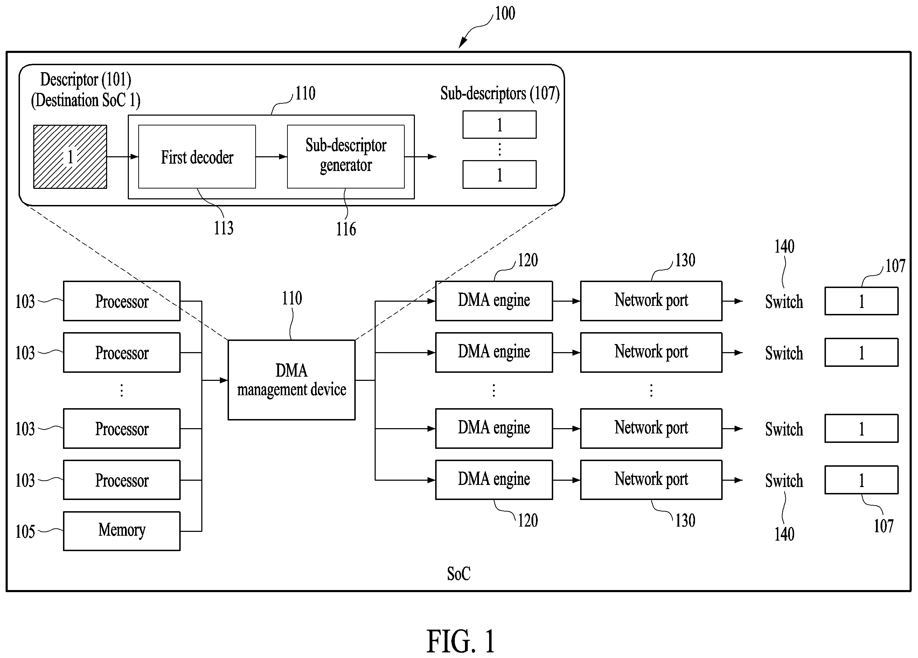

FIG. 1 illustrates an example of an operation of a computer system including a direct memory access (DMA) management device, according to one or more embodiments.

When multiple processors are connected to a single network (e.g. a Peripheral Component Interconnect Express (PCIe), a Compute Express Link (CXL), and an NVLink), a memory bandwidth may be insufficient. A multi-port network may be used by setting a network bandwidth to correspond to the memory bandwidth. The computer system may use multiple network ports to connect multiple switches and multiple processors in a multi-port network.

In order to maximize utilization of the network ports, a process of transmitting data from a memory to the network may be important, and DMA engine(s) responsible for transmitting the data may be utilized.

When an instruction is transmitted by a descriptor to the DMA engine, the DMA engine may transmit the corresponding data of the memory to the network without interference from the processor (i.e., without requiring use of the processor). Although time is required to initially generate the descriptor for the DMA engine, the DMA engine may subsequently transmit the data without interference from the processor, and thus, the DMA engine is utilized in many systems. Since there is a limit to the bandwidth that a single DMA engine may process, multiple DMA engines are being used to accommodate bandwidths of memories and networks that are increasing in the recent artificial intelligence (AI) era.

The multi-port network may be configured by connecting the multiple DMA engines in a single system-on-chip (SoC) to the network ports, respectively, and connecting the network ports to the network to the switches. A multi-port network system configured in this method may store and process very large amounts of data and may share results of Al training and/or inference performed independently and simultaneously by multiple SoCs, utilizing a high network bandwidth. For example, the DMA engines may be used to maximize utilization of the multi-port network. When only a single DMA engine is used to transmit the data to the network, only a single network port may be activated and the remaining network ports may be in idle status, and thus, it may be difficult to reach the bandwidth of the network.

Referring to FIG. 1, according to an example, a structure of a computer system 100 is illustrated. The computer system 100 may include processors 103, a memory 105, a DMA management device 110, DMA engines 120, network ports 130, and switches 140.

The processors 103 may be various processors (xPUs), such as, for example, a central processing unit (CPU), a graphics processing unit (GPU), and/or an Al accelerator. The processors 103 may be homogeneous processors or heterogeneous processors.

The memory 105 may be a single memory shared by the processors 103.

The DMA management device 110 may be a hardware device that manages the DMA engines 120, for example, when an application program aims to achieve maximum performance by utilizing the DMA engines 120. The DMA management device 110 may interpret and manage descriptor(s) 101 requested by (and received from) the processors 103 within an SoC to the DMA engines 120 and/or transmitted from the processors 103 to the DMA engines 120.

The descriptor 101 may be in the form of an instruction that may be interpreted by a DMA device (e.g., the DMA management device 110) including the DMA engines 120 and may include, for example, an address of data to be copied to/through the DMA engines 120 ("source address"), the size of the data, and an address of the data to be stored after copying ("destination address"). The descriptor 101 may be a DMA descriptor and may also be referred to as a "DMA descriptor packet" or a "DMA packet".

The DMA descriptor may define information, such as how much data size to transmit to the source address and the destination address of the data in order to perform DMA, and the DMA descriptor may be in the form of a data structure called a descriptor. For example, when the application program stores information required in the DMA descriptor and transmits the instruction/descriptor, the DMA management device 110 may parse and interpret the DMA descriptor and may cause the DMA engines 120 to perform DMA operations based on the interpreted information. Here, DMA refers to enabling data transmission between hardware without intervention of a host device such as a processor for the data transmission.

The DMA management device 110 may divide the descriptor 101 requested from the application program into several smaller sub-descriptors 107 and may cause the sub-descriptors 107 to be processed in parallel through the DMA engines 120. The DMA management device 110 may be hardware logic (HW Logic) that efficiently manages the DMA engines 120 to maximize throughput of a super node network.

For example, when the descriptor 101, which is destined for destination SoC 1 (or 1 of group N when there is a group), is received, the DMA management device 110 may divide the descriptor 101 into multiple sub-descriptors 107 and may transmit the sub-descriptors 107 to the DMA engines 120, respectively. Each of the DMA engines 120 may perform processing on the sub-descriptor 107 received thereby. In this process, the network ports 130 may be activated to maximize network throughput.

As noted, the DMA management device 110 may decode the descriptor 101 received from the processors 103 sharing the memory 105 and may divide the descriptor 101 into the sub-descriptors 107. The DMA management device 110 may transmit a result of transmitting the sub-descriptors 107 to the DMA engines 120 and performing parallel processing to the switches 140 through at least one network port 130 (e.g., a result of implementing the descriptor 101).

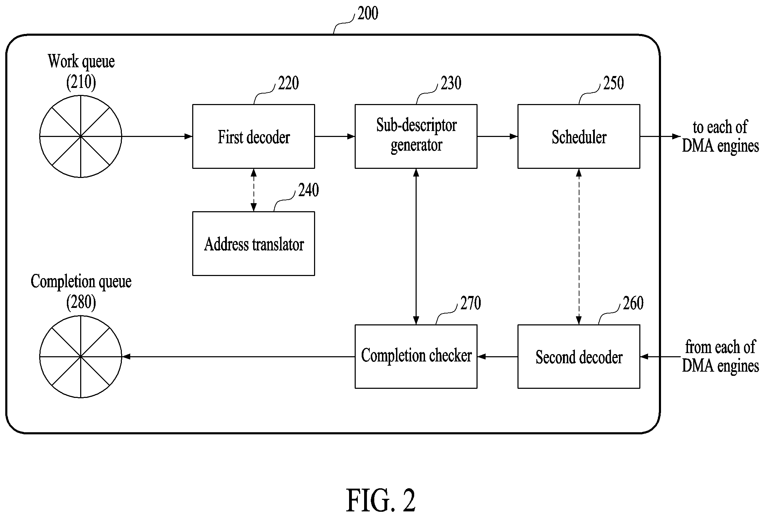

The DMA management device 110 may include a first decoder 113 and a sub-descriptor generator 116. The first decoder 113 may confirm a source address, a destination address, and the size of data to be transmitted ("a transfer size") of the descriptor 101 by decoding the descriptor 101 received through a work queue (e.g., a work queue 210 of FIG. 2). The first decoder 113 may also be referred to as a "descriptor decoder" in that the first decoder 113 decodes the descriptor 101. The sub-descriptor generator 116 may convert (or divide) the descriptor 101 into the sub-descriptors 107 based on a decoding result of the first decoder 113 and may generate metadata corresponding to the sub-descriptors 107. The metadata corresponding to the sub-descriptors 107 may correspond to data used in a scheduler (e.g., a scheduler 250 of FIG. 2) to complete processing of the sub-descriptors 107. The sub-descriptors 107 generated by the sub-descriptor generator 116 and/or the metadata corresponding to the sub-descriptors 107 may be transmitted to other nodes or other SoCs through the DMA engines 120, the network ports 130, and the switches 140. The structure and operation of the DMA management device 110 are described with reference to FIG. 2 below.

The network ports 130 may be connected to a specific service or an application program to identify which application program the data needs to be transmitted to. The switches 140 may be networking switches such as, for example, PCle switches or CXL switches.

FIG. 2 illustrates an example of a DMA management device, according to one or more embodiments. Referring to FIG. 2, according to an example, a DMA management device 200 (e.g., the DMA management device 110 of FIG. 1) may include the work queue 210, a first decoder 220, a sub-descriptor generator 230, an address translator 240, the scheduler 250, a second decoder 260, a completion checker 270, and a completion queue 280.

The work queue 210 may store a descriptor requested from an application program. The work queue 210 may operate as a first-in first-out queue; a descriptor entered into the work queue 210 first may be transmitted to the first decoder 220 first.

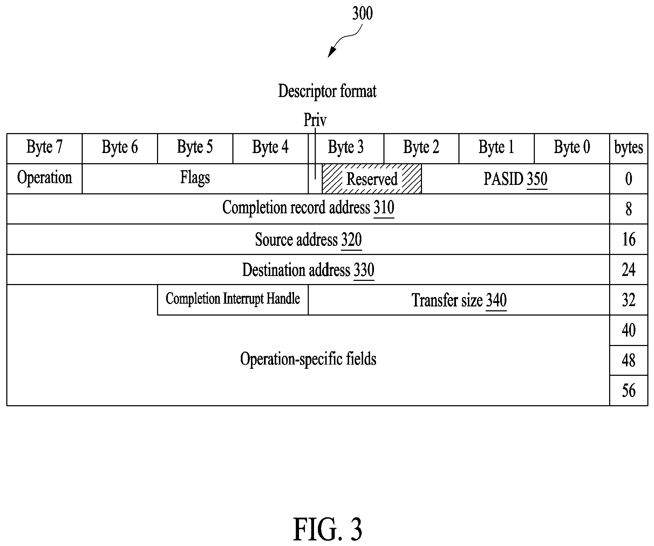

The first decoder 220 may decode the descriptor when it receives the descriptor from the work queue 210. In response, the first decoder 220 may confirm a source address, a destination address, and the size of data to be transmitted ("a transfer size") of the descriptor by decoding the descriptor having a descriptor format 300 shown in FIG. 3 below.

The first decoder 220 may decode the source address, the destination address, and the transfer size included in the descriptor and may store a completion status of the decoding in a completion record address (e.g., a completion record address 310 of FIG. 3) included in the descriptor.

The sub-descriptor generator 230 may divide the descriptor into sub-descriptors based on a result of the decoding of the first decoder 220. The sub-descriptor generator 230 may generate metadata corresponding to the sub-descriptors.

The sub-descriptor generator 230 may compare the transfer size to a threshold. The sub-descriptor generator 230 may divide the descriptor into the sub-descriptors when a result of the comparing shows that the transfer size is greater than the threshold. When the transfer size is less than or equal to the threshold, the sub-descriptor generator 230 may transmit the descriptor to an available DMA engine among the DMA engines without dividing the descriptor.

In addition, the sub-descriptor generator 230 may determine the subset data size of the sub-descriptors based on the number of available DMA engines (# of DMA engines) among the DMA engines included in one SoC. The sub-descriptor generator 230 may determine the subset data size, for example, (subset data size = transfer size / # of DMA engines in SoC). In some cases, the number of sub-descriptors may be more than the number of available DMA engines. The sub-descriptor generator 230 may determine the source address and the destination address by adding an offset equal to the subset size. In brief, the sub-descriptor generator 230 may segment the data identified by the descriptor into the sub-descriptors. The sub-descriptor generator 230 may generate the sub-descriptors by changing the completion record address into a sub-completion record address. Together, the sub-descriptors may have addresses and data sizes that span the data of the descriptor.

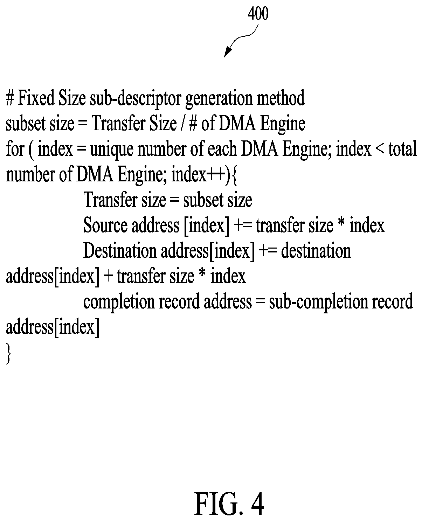

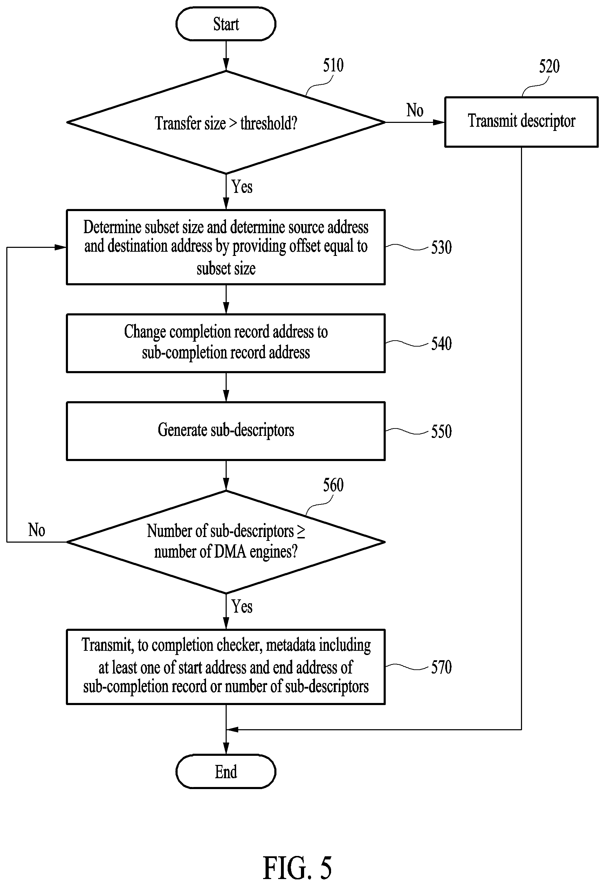

In addition, the sub-descriptor generator 230 may compare the number of sub-descriptors to the number of available DMA engines. As a result of the comparison, when the number of sub-descriptors is greater than or equal to the number of available DMA engines, the sub-descriptor generator 230 may transmit metadata including at least one of a start address and an end address of a sub-completion record or the number (count) of the sub-descriptors to the completion checker 270. The operation of the sub-descriptor generator 230 is described with reference to FIGS. 4 and 5 below.

The DMA management device 200 may utilize the address translator 240 when decoding the descriptor by the first decoder 220. The address translator 240 may convert the source address and/or the destination address. For example, the address translator 240 may convert a virtual address in a virtual address space into a physical address in a physical address space backing the virtual address space, but examples are not necessarily limited thereto. For example, it is assumed that multiple SoCs (or multiple nodes) share the single virtual address space. In this case, when physical addresses of a particular SoC are specified as an offset of a physical address of a reference SoC (e.g., SoC 0), the sub-descriptor generator 230 may also generate a sub-descriptor to transmit data to different network ports for each target SoC through address conversion by the address translator 240.

According to an example, network traffic may be reduced and network congestion may be avoided by allowing network traffic, which is transmitted to different SoCs, to be transmitted through different network ports among multiple network ports.

When the sub-descriptor generator 230 confirms/translates the physical address through the address translator 240, and when a single descriptor includes addresses pointing to different destination nodes (or different destination SoCs), the sub-descriptor generator 230 may divide the descriptor into different sub-descriptors corresponding to different destination nodes.

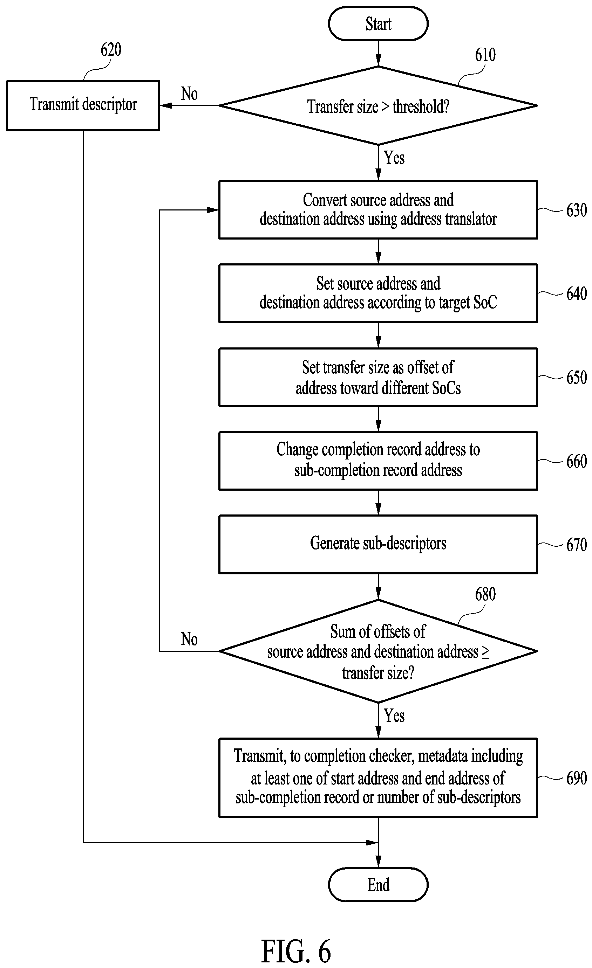

The address translator 240 may convert the source address or the destination address (identified through decoding of the descriptor) when the transfer size decoded by the first decoder 220 is greater than the threshold. The address translator 240 may set the source address and the destination address according to the target SoC. The address translator 240 may compare the transfer size to the sum of offsets of the source address and the destination address set according to the target SoC. According to a result of the comparison, the address translator 240 may set the transfer size by adding an offset (corresponding to an address of the target SoC) to the transfer size. The operation of the address translator 240 is described with reference to FIG. 6 below.

The scheduler 250 may schedule provisioning of the sub-descriptors generated (converted) by the sub-descriptor generator 230 to the DMA engines according to statuses of the DMA engines, respectively. The scheduler 250 may also be referred to as a "sub-descriptor scheduler" in that the scheduler 250 schedules the sub-descriptors.

The scheduler 250 may determine status information of the DMA engines as one of, for example, a busy status, a fault status, an error status, a free status, and a retry status (for each DMA engine). The scheduler 250 may assign the sub-descriptors to an available DMA engine according to the determined status. For example, the "busy status" of a DMA engine may refer to a status where the DMA engine is being used in another task. The "fault status" of a DMA engine may refer to a status, for example, where the DMA engine does not have permission to access memory when attempting to access the memory or where an error has occurred due to access to an incorrect memory address. The "error status" of a DAM engine may refer to a status where data is corrupted or data transmission is stopped due to bus errors, data corruption, and/or timing issues during the data transmission by the DMA engine. The "free status" of a DMA engine may refer to a status where the DMA engine is not being used in another task, in other words, the DMA engine is available. The "retry status" may refer to a status where the DMA engine retries data transmission to resolve a temporary error or crash that has occurred in correspondence with the above-described fault status or error status.

The scheduler 250 may monitor the status of the DMA engines based on the status information, which corresponds to the plurality of DMA engines, stored in the sub-completion record address.

More specifically, the scheduler 250 may schedule requests from multiple sub-descriptors. For example, when all DMA engines included in a single SoC are available, the scheduler 250 may transmit the sub-descriptors to each DMA engine in a round-robin form. For example, the scheduler 250 may check the status of each DMA engine and may transmit the sub-descriptor to an available DMA engine.

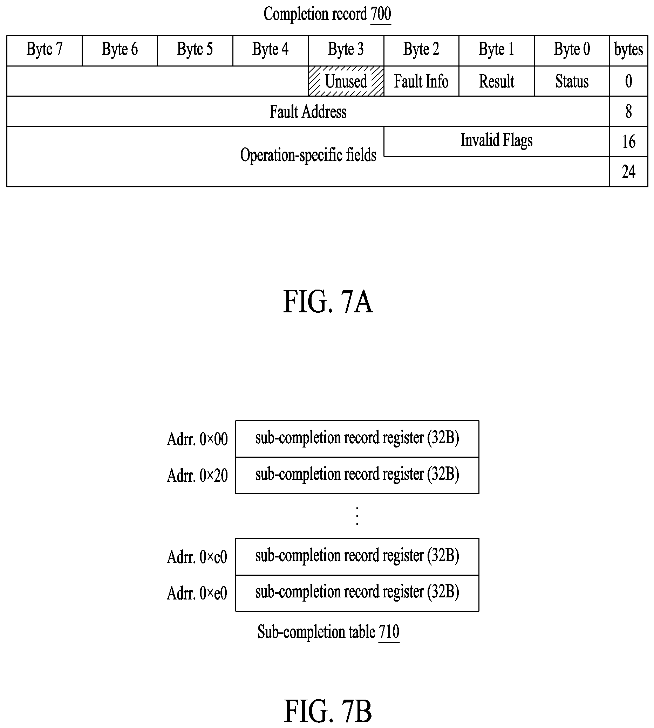

After the processing of a sub-descriptor is completed, the scheduler 250 may store the status of each DMA engine as completion status information in the sub-completion record address in a sub-completion table 710 (see FIG. 7B) through the second decoder 260. The scheduler 250 may monitor the status of each DMA engine as the second decoder 260 transmits the completion status information.

The second decoder 260 may decode/determine whether the processing of the sub-descriptors scheduled to the plurality of DMA engines by the scheduler 250 is completed and may transmit errors that have occurred during the processing of the sub-descriptors to the scheduler 250. Here, errors that may have occurred during the processing of the sub-descriptors may include errors and faults. The second decoder 260 may also be referred to as a "sub-completion decoder" in that the second decoder 260 decodes whether the processing of the sub-descriptors is completed.

The second decoder 260 may transmit, to the scheduler 250, information of the sub-completion record related to the completion of processing the sub-descriptors, information about the errors that have occurred during the processing of the sub-descriptors, or the status information of the DMA engines.

The second decoder 260 may include a sub-completion table including the information of the sub-completion record. The information of the sub-completion record may be accessed through the sub-completion record address, which is a completion record address included in the sub-descriptors. The second decoder 260 may confirm whether the processing of the sub-descriptors is completed by looking up a sub-completion table. An example of the sub-completion table is the sub-completion table 710 of FIG. 7B below.

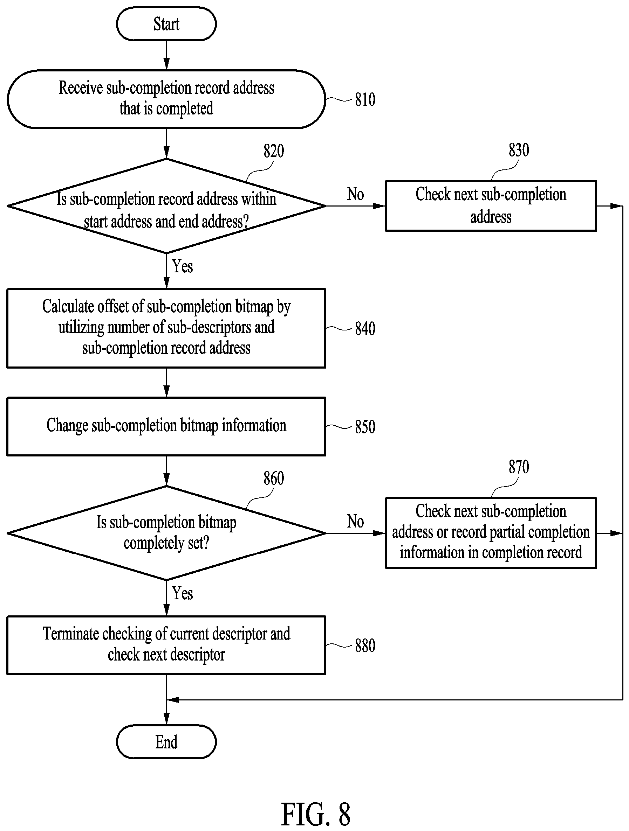

The completion checker 270 may check whether the processing of each of the sub-descriptors is completed and may store results of the checking in the completion queue 280. The completion checker 270 may determine whether the sub-descriptors are normally terminated by synthesizing the sub-completion records in which the processing is completed by each of the sub-descriptors. The completion checker 270 may store completion record information in a completion record address corresponding to the descriptor by updating the completion queue 280 according to a result of the determining. An example of a completion record is shown in FIG. 7A below. The operation of the completion checker 270 is described with reference to FIG. 8 below.

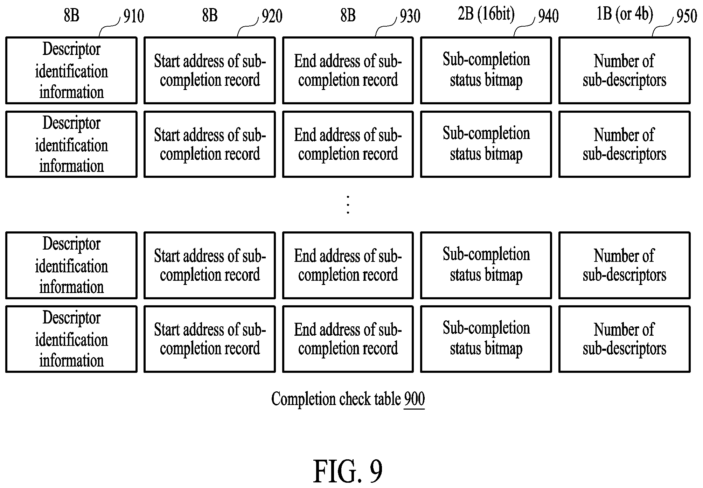

The completion checker 270 may include a completion check table. The completion check table may include identification information of the descriptor, the completion record address corresponding to the descriptor, a start address of the completion record address, an end address of the completion record address, a bitmap representing a completion status corresponding to the sub-descriptors, or the number of sub-descriptors. An example of the completion check table is described with reference to FIG. 9 below.

The completion queue 280 may store indications of whether the processing corresponding to each of the sub-descriptors is completed. The completion queue 280 may sequentially store indications of whether the processing corresponding to each of the sub-descriptors is completed, for example, in the order of the identification information of the sub-descriptors, but examples are not necessarily limited thereto.

For example, when a descriptor request is received, the operation of the DMA management device 200 may be as follows.

When a descriptor request is received in the work queue 210, the DMA management device 200 may interpret (decode) the descriptor through the first decoder 220 to confirm the source address, the destination address, and the size of data to be transmitted (the transfer size) of the corresponding descriptor.

Here, the address translator 240 may identify which node (e.g., the target SoC) the corresponding descriptor is to be transmitted to based on the source address and the destination address. The address translator 240 may set the source address and the destination address of the descriptor (or the sub-descriptor) according to the target SoC corresponding to a transmission target of the descriptor (or the sub-descriptor) and may add the offset corresponding to the address of the target SoC to the transfer size according to the result of comparing the transfer size to the sum of the offsets of the source address and the destination address set according to the target SoC, thereby setting the final transfer size of the descriptor.

For example, when the sum of the offsets is less than the transfer size, the DMA management device 200 may convert the source address and the destination address using the address translator 240. When the sum of the offsets is greater than or equal to the transfer size, the DMA management device 200 may transmit, by the sub-descriptor generator 230, the metadata including at least one of the start address and the end address of the sub-completion record or the number of sub-descriptors to the completion checker 270.

The sub-descriptor generator 230 may divide the descriptor interpreted by the first decoder 220 into the sub-descriptors. When the descriptor is divided into the sub-descriptors, the sub-descriptor generator 230 may generate metadata corresponding to each of the sub-descriptors and may transmit the generated metadata to the completion checker 270 to enable it to properly process whether each of the sub-descriptors is completed. The completion checker 270, which receives the metadata, may store the corresponding data in a completion check table (e.g., a completion check table 900 of FIG. 9).

When generating a sub-descriptor, the sub-descriptor generator 230 may change the completion record address 310 included in a descriptor format (e.g., the descriptor format 300 of FIG. 3) to the corresponding address (e.g., an address corresponding to the sub-descriptor). When the sub-descriptor generator 230 completes processing of the sub-descriptor, the sub-descriptor generator 230 may store the completion record information in the sub-completion record address included in the sub-completion table 710 of FIG. 7B. The completion checker 270 may confirm whether the processing of the sub-completion record is completed by comparing the start address and the end address of the sub-completion record stored in the completion check table 900 to the sub-completion record address included in the sub-completion table 710.

The scheduler 250 that receives the sub-descriptors from the sub-descriptor generator 230 may schedule the sub-descriptors according to the statuses of the DMA engines, respectively.

After processing the sub-descriptors, the DMA engines may transmit a sub-completion indication corresponding to each sub-descriptor to the DMA management device 200, and the second decoder 260 may interpret (decode) the sub-completion indication received from each of the DMA engines.

The DMA management device 200 may transmit a result of the interpreting the sub-completion indication to the completion checker 270. As a result of the interpretation of the sub-completion indication, when an error or fault occurs in a particular DMA engine, the DMA management device 200 may transmit the occurrence of the error or fault in the particular DMA engine to the scheduler 250, thereby causing the scheduler 250 to perform scheduling by reflecting the particular DMA engine in which the error or fault has occurred.

The completion checker 270 may confirm whether all sub-completion indications of the respective sub-descriptors are properly processed based on the data received from the sub-descriptor generator 230. The completion checker 270 may store the completion status corresponding to each of the sub-descriptors in the completion queue 280 so that the application program may recognize that the processing corresponding to all sub-descriptors is completed or that only part of the processing is completed.

FIG. 3 illustrates an example of a format of a descriptor, according to one or more embodiments. Referring to FIG. 3, according to an example, the descriptor format 300 for a first decoder (e.g., the first decoder 113 of FIG. 1 and/or the first decoder 220 of FIG. 2) is illustrated.

The descriptor format 300 may include the completion record address 310, a source address 320, a destination address 330, a transfer size 340, and a process address space identifier (PASID) 350, but examples are not necessarily limited thereto.

A DMA management device may confirm the source address 320, the destination address 330, and the size of data to be transmitted ("the transfer size 340") of the descriptor by decoding the descriptor format 300 of the descriptor by the first decoder. Here, the descriptor may be a DMA descriptor.

The source address 320 may be information representing where to retrieve the data, in other words, a location of a source from which the data is retrieved. The destination address 330 may correspond to information representing where to store the data, in other words, a location of a destination in which the data is to be stored. The transfer size 340 may correspond to information representing how much data to transmit, in other words, the amount of data to be transmitted.

After processing of the descriptor is completed (the corresponding data has been transferred), the DMA management device may notify an application program of information representing the completion of the processing in two main methods. One method is to store completion status information in the completion record address 310 of the descriptor format 300 so that the application program may read the information directly through polling. The other method is to use an interrupt method to notify the application program of information that processing of the descriptor is completed. The first decoder may interpret various information included in the descriptor format 300 of the descriptor as described above and may transmit the interpreted information to a sub-descriptor generator.

The PASID 350 may correspond to a unique identifier used to identify an address space of a particular process. The PASID 350 may be used primarily for tasks related to input/output (I/O) memory management. The DMA management device may improve security and stability by isolating memory access of each process using the PASID 350 when multiple processes use the same DMA engine. The DMA management device may use the PASID 350 together with an I/O memory management unit (IOMMU) to convert a virtual address into a physical address through an address translator, thereby causing a DMA engine to access a proper memory area. The DMA management device may optimize performance of a multi-port network system and enable efficient memory usage by assigning DMA requests to a particular process through the PASID 350.

FIG. 4 illustrates an example of an operation of a sub-descriptor generator, according to one or more embodiments. Referring to FIG. 4, according to an example, pseudo code 400 showing an operation process of a sub-descriptor generator (e.g., the sub-descriptor generator 116 of FIG. 1 and/or the sub-descriptor generator 230 of FIG. 2) is illustrated.

The sub-descriptor generator may determine the subset size of sub-descriptors based on the number of available DMA engines (# of DMA engines free/available for use at a given time) among the DMA engines included in one SoC. The sub-descriptor generator may determine the subset size, for example, by executing the equivalent of "subset size = transfer size / # of DMA engines in SoC". The sub-descriptor generator may determine a source address and a destination address by adding an offset equal to the subset size for the source address and the destination addresses corresponding to each of the DMA engines.

The sub-descriptor generator may generate the sub-descriptors by changing a completion record address included in a descriptor format into a sub-completion record address of a completion check table (e.g., the completion check table 900 of FIG. 9). The sub-descriptor generator may generate information (e.g., metadata) corresponding to the sub-descriptors and may then transmit the information to a completion checker. The metadata may include at least one of identification information of the descriptor, a start address and an end address of a sub-completion record, and the number of sub-descriptors, but examples are not necessarily limited thereto.

FIG. 5 illustrates an example of a method of operating a sub-descriptor generator, according to one or more embodiments. According to an example, the sub-descriptor generator (e.g., the sub-descriptor generator 116 of FIG. 1 and the sub-descriptor generator 230 of FIG. 2) may determine how to divide a corresponding descriptor into sub-descriptors based on information received from a first decoder (e.g., the first decoder 113 of FIG. 1 and/or the first decoder 220 of FIG. 2) decoding the descriptor.

FIG. 5 illustrates a process of generating the sub-descriptors based on a transfer size by the sub-descriptor generator. Referring to FIG. 5, the sub-descriptor generator according to an example may generate the sub-descriptors and metadata corresponding to the sub-descriptors through operations 510 to 570.

In operation 510, the sub-descriptor generator may, after receiving a descriptor, check the transfer size of the descriptor to determine whether the transfer size of the descriptor is greater than a threshold.

In operation 510, when it is determined that the transfer size of the descriptor is less than or equal to the threshold ("No"), in operation 520, the sub-descriptor generator may terminate the operation after transmitting the descriptor to a DMA engine that may utilize service the descriptor.

Otherwise, in operation 510, when it is determined that the transfer size of the descriptor is greater than the threshold ("Yes"), the sub-descriptor generator may determine a subset size and may determine a source address and a destination address by providing an offset equal to the subset size. The threshold may be set before the subset size is determined.

Here, there may be various methods to determine the subset size. The sub-descriptor generator may determine the subset size as a size fixed through a configuration of a hardware device or may change the subset size dynamically. The sub-descriptor generator may determine the subset size according to various policies. The sub-descriptor generator may determine the subset size according to the number of currently available DMA engines, for example, (subset size = transfer size / # of DMA engines in SoC) as described above with reference to FIG. 4.

When the subset size is determined in operation 530, the sub-descriptor generator, in forming new descriptors (the new sub-descriptors), may change the source address and the destination address to correspond to the subset size. The sub-descriptor generator may determine the source address and the destination address by providing an offset equal to the subset size. In other words, the sub-descriptor generator may determine a value, in which the offset (equal to the subset size) is added to the source address and the destination address, as the source address and the destination address.

In operation 540, the sub-descriptor generator may change a completion record address to a sub-completion record address.

In operation 550, the sub-descriptor generator may generate the sub-descriptors according to the sub-completion record address changed in operation 540.

In operation 560, the sub-descriptor generator may determine whether the number of sub-descriptors generated in operation 550 is greater than or equal to the number of available DMA engines. Here, the sub-descriptor generator may compare the number of generated sub-descriptors to the transfer size/subset size instead of the number of available DMA engines.

In operation 560, when it is determined that the number of sub-descriptors is less than the number of available DMA engines ("No"), the sub-descriptor generator may re-determine the subset size in operation 530 and may determine the source address and the destination address according to the re-determined subset size.

Otherwise, in operation 560, when it is determined that the number of sub-descriptors is greater than or equal to the number of available DMA engines ("Yes"), in operation 570, the sub-descriptor generator may transmit, to a completion checker, metadata including at least one of a start address and an end address of a sub-completion record or the number of sub-descriptors. Here, the metadata may further include identification information about the corresponding descriptor. The sub-descriptor generator may transmit the metadata to the completion checker when the generation of the sub-descriptors is completed so that the completion checker may use the metadata during a completion check.

FIG. 6 illustrates an example of a method of operating a sub-descriptor generator when an address translator is used, according to one or more embodiments. According to an example, a first decoder (e.g., the first decoder 113 of FIG. 1 and/or the first decoder 220 of FIG. 2) may utilize the address translator (e.g., the address translator 240 of FIG. 2) when decoding a descriptor.

Referring to FIG. 6, an operation process of the sub-descriptor generator is illustrated when the address translator according to an example is used together with the sub-descriptor generator. As described above, the sub-descriptor generator may confirm a physical address of the descriptor through the address translator and may generate different sub-descriptors when addresses representing different destination nodes are included in a single descriptor. The sub-descriptor generator may generate the sub-descriptors and metadata corresponding to the sub-descriptors through operations 610 to 690.

In operation 610, the sub-descriptor generator may check the transfer size of the descriptor to determine whether the transfer size of the descriptor is greater than a threshold.

In operation 610, when it is determined that the transfer size of the descriptor is less than or equal to the threshold ("No"), no sub-descriptors are generated and in operation 620 the sub-descriptor generator may terminate the operation after transmitting the descriptor to a DMA engine that may utilize the descriptor.

Otherwise, in operation 610, when it is determined that the transfer size of the descriptor is greater than the threshold ("Yes"), in operation 630, the sub-descriptor generator may convert the source address and the destination address using the address translator.

In operation 640, the sub-descriptor generator may set the source address and the destination address converted in operation 630 according to a target SoC.

In operation 650, the sub-descriptor generator may set the transfer size as an offset of an address toward different SoCs (the target SoC) set in operation 640. The sub-descriptor generator may set a final transfer size by adding the offset corresponding to the address of the target SoC to the transfer size.

In operation 660, the sub-descriptor generator may change a completion record address to a sub-completion record address by reflecting the transfer size set in operation 650.

In operation 670, the sub-descriptor generator may generate the sub-descriptors according to the sub-completion record address changed in operation 660.

In operation 680, the sub-descriptor generator may compare the transfer size to the sum of offsets of the source address and the destination address corresponding to the sub-descriptors generated in operation 670.

In operation 680, when it is determined that the sum of the offsets is less than the transfer size ("No"), the sub-descriptor generator may perform operation 630 and following processes.

Otherwise, in operation 680, when it is determined that the sum of the offsets is greater than or equal to the transfer size ("Yes"), in operation 690, the sub-descriptor generator may transmit, to a completion checker, metadata including a start address and an end address of a sub-completion record or the number of sub-descriptors. Here, the metadata may further include identification information about a descriptor. The sub-descriptor generator may transmit the metadata to the completion checker so that the completion checker may use the metadata during a completion check.

FIG. 7A illustrates an example of a completion record, according to one or more embodiments. Referring to FIG. 7A, an example of a completion record 700 of a second decoder is illustrated.

According to an example, after processing of a sub-descriptor is completed, a scheduler (e.g., the scheduler 250 of FIG. 2) may store a status of each DMA engine as completion status information in a sub-completion record address described in a left address (e.g., Adrr.0x00, Adrr.0x20, etc.) of the sub-completion table 710 of FIG. 7B, which may be done by the second decoder (e.g., the second decoder 260 of FIG. 2).

The completion record 700 may store the completion status information. The completion status information may include information regarding whether processing of a DMA descriptor is performed normally. The completion record 700 may be stored in a sub-completion record register of the sub-completion table 710 of FIG. 7B.

When an error occurs during the processing of the DMA descriptor, the completion record 700 may provide information (fault info) about what kind of fault the corresponding error is.

The size of the completion record 700 may be, for example, 32 bytes, but examples are not necessarily limited thereto. The completion record 700 may further include information that may be used to confirm the status of the DMA engine, such as reserved and/or unused. The second decoder may transmit, to the scheduler, status information of the DMA engine included in the completion record 700.

For example, when the sub-descriptor is performed/serviced in the DMA engine, the second decoder may store completion record status information in the sub-completion record address.

The second decoder may, for example, check the sub-completion record register included in the sub-completion table 710 illustrated in FIG. 7B, may determine whether the processing of the sub-descriptor is successful, and may transmit a result of the determining to the completion checker. The second decoder may perform the checking using a method of polling the sub-completion table 710. When needed, the second decoder may retry the processing by transmitting, back to the scheduler, a sub-descriptor of which the processing is identified to have failed through the sub-completion table 710.

Alternatively, the second decoder may store additional information (e.g., a status of a work queue of a current DMA engine) in the sub-completion record of the sub-completion table 710 illustrated in FIG. 7B and may transmit the sub-completion record to the scheduler, thereby performing quality of service (QoS) scheduling. The QoS scheduling is technology of managing various traffic types on a network and optimizing network performance by prioritizing each traffic type appropriately, thereby guaranteeing a bandwidth and low latency required by an important application program.

In addition, the second decoder may transmit sub-completion information in advance, causing the application program to perform other tasks in advance in a status where whole processing of the descriptor is not complete.

FIG. 7B illustrates an example of a sub-completion table. Referring to FIG. 7B, according to an example, the sub-completion table 710 may include multiple sub-completion records. The multiple sub-completion records may be included in each sub-completion record register. Each sub-completion record may be accessed through a sub-completion address, and a completion record address (e.g., the completion record address 310 of FIG. 3) included in the sub-descriptor may correspond to the sub-completion address.

Accordingly, when the processing of a sub-descriptor is performed in each DMA engine, the corresponding sub-completion record may be stored in the corresponding sub-completion address of the sub-completion table 710, and the second decoder may look up the sub-completion table 710 to confirm whether the processing of the sub-descriptor is completed. The sub-completion record that has completed the processing may be transmitted to the completion checker.

The completion checker may synthesize the multiple sub-completion records to determine whether processing of sub-descriptors divided into multiple numbers has completed normally. The completion checker may store final completion record information in the completion record address corresponding to the descriptor transmitted through the work queue by updating a completion queue on whether the processing of the sub-descriptors is completed.

FIG. 8 illustrates an example of a method of operating a completion checker, according to one or more embodiments. Referring to FIG. 8, according to an example, the completion checker (e.g., the completion checker 270 of FIG. 2) may check whether processing of a descriptor is completed through operations 810 to 880.

In operation 810, the completion checker may receive a sub-completion record address in which processing is completed. The sub-completion record address may correspond to a sub-descriptor in which processing has been completed in a DMA engine and may be included in the sub-completion table 710 of FIG. 7B.

In operation 820, the completion checker may check whether the sub-completion record address received in operation 810 is within a range of a start address and an end address of the sub-completion record address. The completion checker may confirm whether the processing of the sub-completion record is completed by comparing the start address and the end address of the sub-completion record stored in the completion check table 900 to the sub-completion record address included in the sub-completion table 710.

In operation 820, when it is confirmed that the sub-completion record address is not within the range of the start address and the end address of the sub-completion record address ("No"), in operation 830, the completion checker may check a next sub-completion record address (one received at operation 810).

Otherwise, in operation 820, when it is confirmed that the sub-completion record address is within the range of the start address and the end address of the sub-completion record address ("Yes"), in operation 840, the completion checker may calculate an offset of a sub-completion bitmap by utilizing the number of sub-descriptors and an address of the sub-completion record. The completion checker may calculate the offset of the sub-completion bitmap by checking the number of sub-descriptors and where an address of a current sub-completion record is located within the start address and the end address described above.

In operation 850, the completion checker may change sub-completion bitmap information based on the offset calculated in operation 840 (the bitmap may represent each sub-descriptor as a bit). The completion checker may change/set the sub-completion bitmap information based on the offset calculated in operation 840 (e.g., update a bit corresponding to the sub-descriptor).

In operation 860, the completion checker may check whether the sub-completion bitmap information changed in operation 850 is completely set (whether all the bits of the sub-descriptors are set).

In operation 860, when it is confirmed that the sub-completion bitmap information is not completely set ("No"), in other words, only a part of the sub-completion bitmap information is set, in operation 870, the completion checker may check the next sub-completion address or may record partial completion information in a completion record, as the case may be. Depending on the situation, the completion checker may also record a part of completion information in the completion record.

Otherwise, in operation 860, when it is confirmed that the sub-completion bitmap information is completely set ("Yes"), in operation 880, the completion checker may terminate the checking of the current descriptor and may check a next descriptor (here, the next descriptor may be a sub-descriptor or a regular descriptor). When it is confirmed that the sub-completion bitmap information is completely set, the completion checker may store the completion information in a completion record address corresponding to identification information of the corresponding descriptor and may check identification information of the next descriptor, thus signaling that the descriptor of the sub-descriptors has been fully serviced. According to an example, sequential checking of the descriptor may be ensured through checking based on the identification information of the descriptor.

The completion checker may also record information such as the number of sub-descriptors divided from the current descriptor and whether the processing of the sub-descriptors is completed by utilizing a reserved area (reserved byte) or an unused area (unused byte) within the completion record so that an application program may directly utilize data in advance in which the processing has completed (e.g., allowing access of the transferred data before all of the data of the original descriptor has been transferred).

FIG. 9 illustrates an example of a completion check table included in a completion checker, according to one or more embodiments. The check table may have rows respectively representing descriptors. Referring to FIG. 9, according to an example, each row/entry of the completion check table 900 may include items/fields such as descriptor identification information 910, a start address of a sub-completion record 920, an end address of a sub-completion record 930, a sub-completion status bitmap 940, and a number of sub-descriptors 950. The descriptor identification information 910, the start address of a sub-completion record 920, and the end address of a sub-completion record 930 may have a size of, for example, 8 bytes. The sub-completion status bitmap 940 may have a size of 2 bytes (16 bits). The number of sub-descriptors 950 may have a size of 1 byte or 4 bits.

Information stored in the completion check table 900 may correspond to information that is generated by a sub-descriptor generator and transmitted to the completion checker after all sub-descriptors are generated. The completion checker may check a sub-completion record address corresponding to each sub-descriptor by the completion check table 900.

The completion checker may identify, based on the information in the completion check table 900, which sub-descriptor has generated each sub-completion through the descriptor identification information 910 and may confirm the processing of which number of sub-descriptors is completed.

The completion checker may confirm whether sub-completion has arrived from all sub-descriptors and may store a result of the confirming as completion record information in the sub-completion record address of the completion check table 900. The size (byte) of each item represented in a column of the completion check table 900 is an example, and the size of each item may vary depending on the number of DMA engines or a network implementation method.

For example, when multiple processors access the DMA engines simultaneously, a DMA management device may store PASID information included in a descriptor in the completion check table 900.

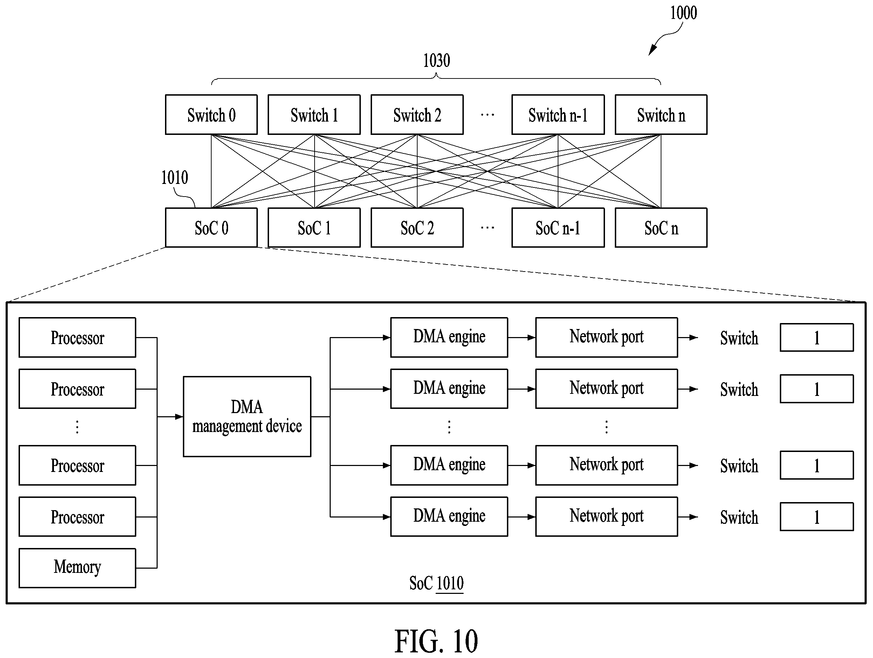

FIG. 10 illustrates an example of a structure of an SoC including a DMA management device and a configuration of a multi-port network, according to one or more embodiments. Referring to FIG. 10, according to an example, a multi-port network system 1000 is illustrated including SoCs 1010 and switches 1030, wherein each of the SoCs 1010 includes a DMA management device.

Each of the SoCs 1010 may have a single DMA management device connected to multiple processors, and the single DMA management device may have multiple DMA engines and a multi-port network form connected to the DMA engines.

One DMA management device may be provided, as shown in FIG. 10, or more DMA management devices may be provided. The DMA management device may be connected to the processors and the DMA engines included in each SoC. Here, the plurality of DMA engines may be connected to respectively corresponding network ports of the plurality of DMA engines or may share a single network port. In addition, network ports connected to each of the DMA engines may be connected to the switches 1030 (network switches).

According to an example, the multi-port network system 1000 may be configured by connecting the multiple (e.g., "n") SoCs 1010 to the multiple (e.g., "n") switches 1030. In the multi-port network system 1000, the processors may control the DMA engines through the single DMA management device. Here, the DMA engines may be connected to the network ports connected to different switches. In such a method, the processors, the DMA engines, the network ports, and the switches connected to each other with respect to the single DMA management device may be defined as the single SoC 1010. That is, the single SoC 1010 is representative of the other SoCs.

The single SoC 1010 may include the network ports, and thus, the same single SoC 1010 may be connected to each of the different switches 1030 (e.g. switch 0, switch 1, switch 2, ..., switch n-1, and switch n). In addition, each of the switches 1030 (e.g. switch 0, switch 1, switch 2, ..., switch n-1, and switch n) may be connected to each of the SoCs 1010 (e.g., SoC 0, SoC1, SoC2, ..., SoC n-1, and SoC n) through the network ports.

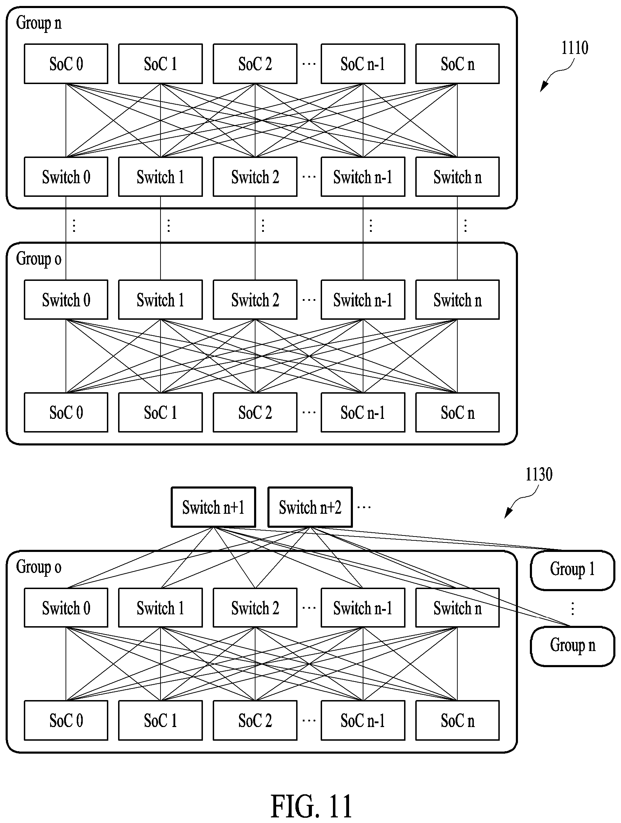

FIG. 11 illustrates an example of a configuration of a multi-port network system in a multi-layer environment, according to one or more embodiments. Referring to FIG. 11, according to an example, various connection configurations 1110 and 1130 of switches belonging to different groups in the multi-port network system are illustrated.

The multi-port network system may be configured as a structure in which the switches belonging to different groups are connected to each other in the multi-layer environment, as shown in the connection type 1110, or as a structure in which all of the switches (e.g., switch 0, switch 1, switch 2, ..., switch n-1, and switch n) belonging to each group are connected to additional switches (e.g., switch n+1 and switch n+2) located in different layers, as shown in the connection type 1130.

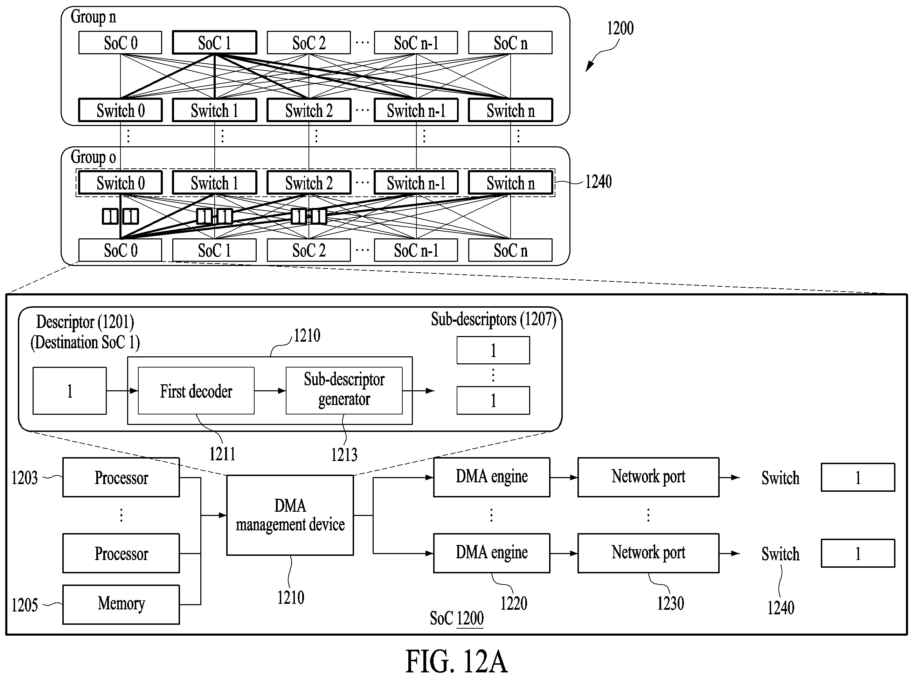

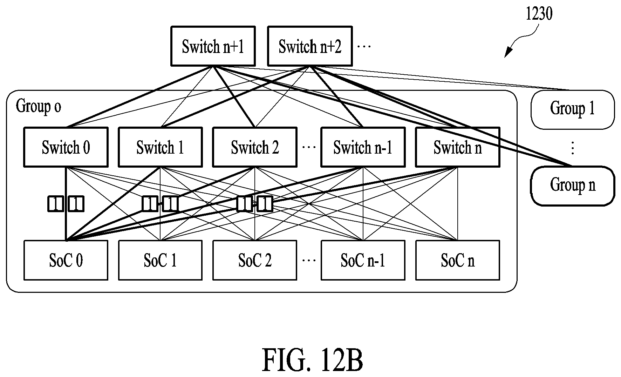

FIGS. 12A and 12B illustrate an example of maximizing bandwidth utilization by dividing sub-descriptors by the number of DMA engines, according to one or more embodiments.

Referring to FIG. 12A, according to an example, diagram 1200 illustrates an operation when a descriptor 1201 (having a destination SoC 1) to a number 1 group (a group 1 of a group N when there is a group) is received by a DMA management device 1210.

The DMA management device 1210 may decode the descriptor 1201 by a first decoder 1211, may divide or convert the descriptor 1201 into sub-descriptors 1207 by a sub-descriptor generator 1213 according to a result of the decoding, and may transmit the sub-descriptors 1207 to each of DMA engines 1220. Here, the DMA management device 1210 may be connected to multiple processors 1203 and a single memory 1205.

In this process, multiple network ports 1230 connected the respective DMA engines 1220 may be activated. The network ports 1230 activated may activate switches 1240 in various network environments to maximize network throughput. Here, the DMA management device 1210 may maximize utilization of the bandwidth of the memory 1205 by dividing the sub-descriptors 1207 into the number of DMA engines 1220 and transmitting the sub-descriptors 1207.

In addition, the DMA management device 1210 may secure maximal throughput by activating multiple switches configured in multiple layers, as shown in the network ports 1230.

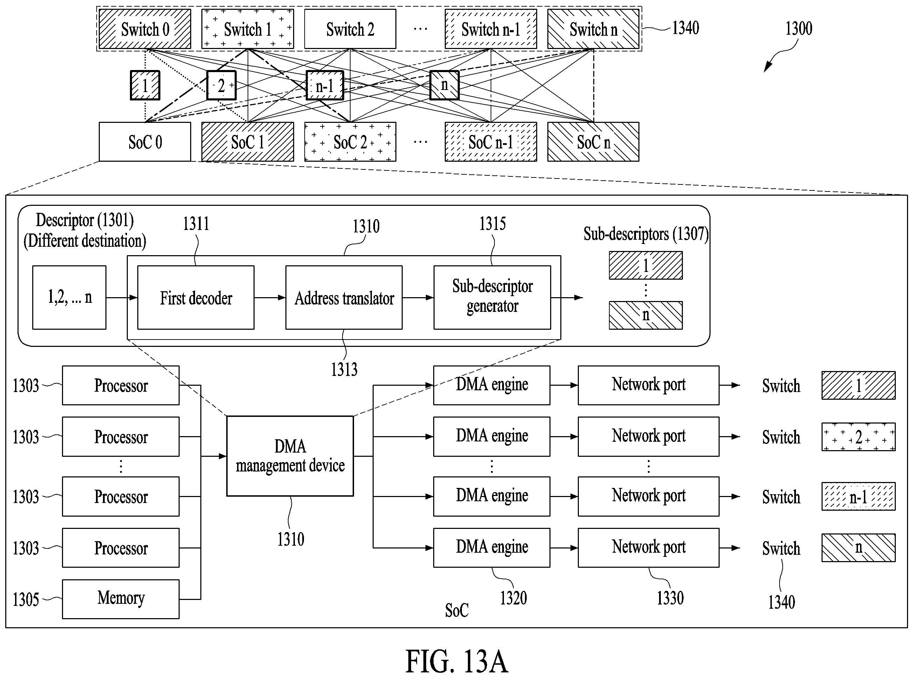

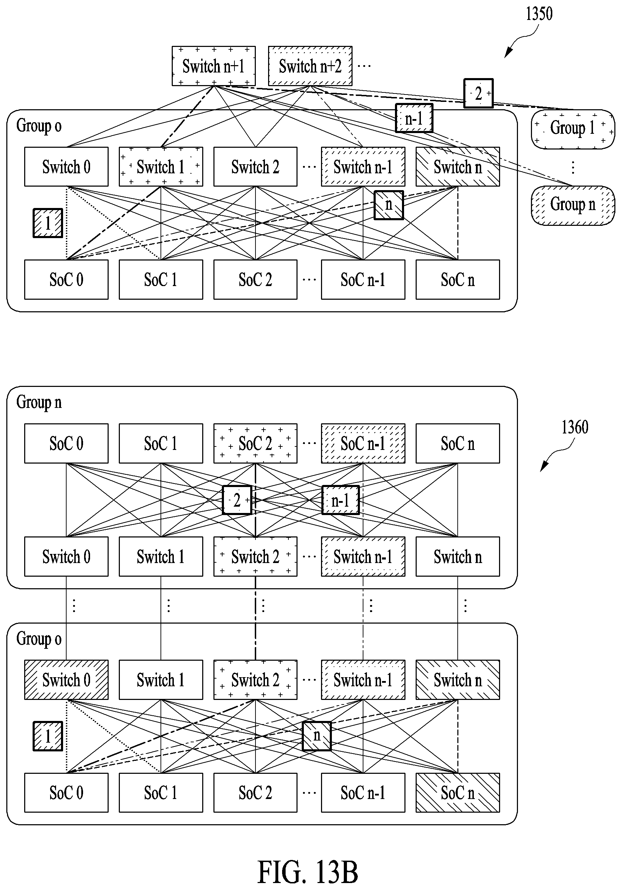

FIGS. 13A and 13B illustrate an example of transmitting data to different SoCs through multiple DMA engines by an address translator, according to one or more embodiments.

Referring to FIGS. 13A and 13B, a diagram 1300 illustrates an operation when a single descriptor 1301 includes destination addresses to different SoCs (e.g., SoC 0, SoC1, SoC2, ..., SoC n-1, and SoC n).

For example, when the single descriptor 1301 includes the destination addresses to different SoCs (e.g., SoC 0, SoC1, SoC2, ..., SoC n-1, and SoC n), a DMA management device 1310 may decode the single descriptor 1301 by a first decoder 1311. The DMA management device 1310 may convert an address in advance through an address translator 1313 based on a result of the decoding and may generate different sub-descriptors 1307 for the respective destination SoCs through a sub-descriptor generator 1315.

The DMA management device 1310 may transmit the different sub-descriptors 1307 for the respective destination SoCs to the respective DMA engines 1320, thereby causing the different sub-descriptors 1307 to be transmitted to each of different switches 1340 through multiple network ports 1330 connected the respective DMA engines 1320. According to an example, different network links may be activated during the above-described process to avoid network congestion situations.

Alternatively, the DMA management device 1310 may avoid network congestion situations by utilizing switches belonging to different layers, as shown in a diagram 1350 of FIG. 13B, or by utilizing DMA engines and/or switches belonging to different groups, as shown in a diagram 1360, to transmit the sub-descriptors 1307 to different SoCs.

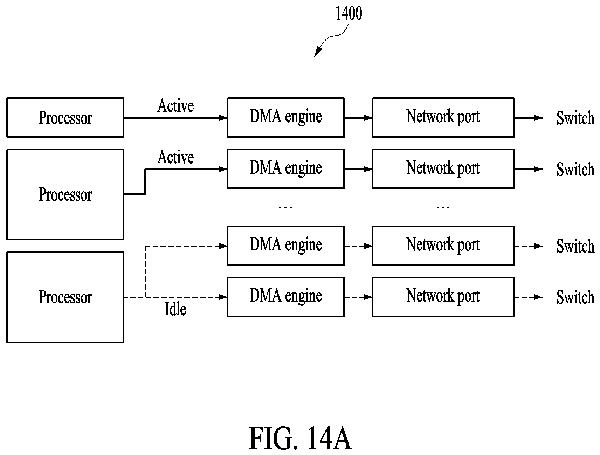

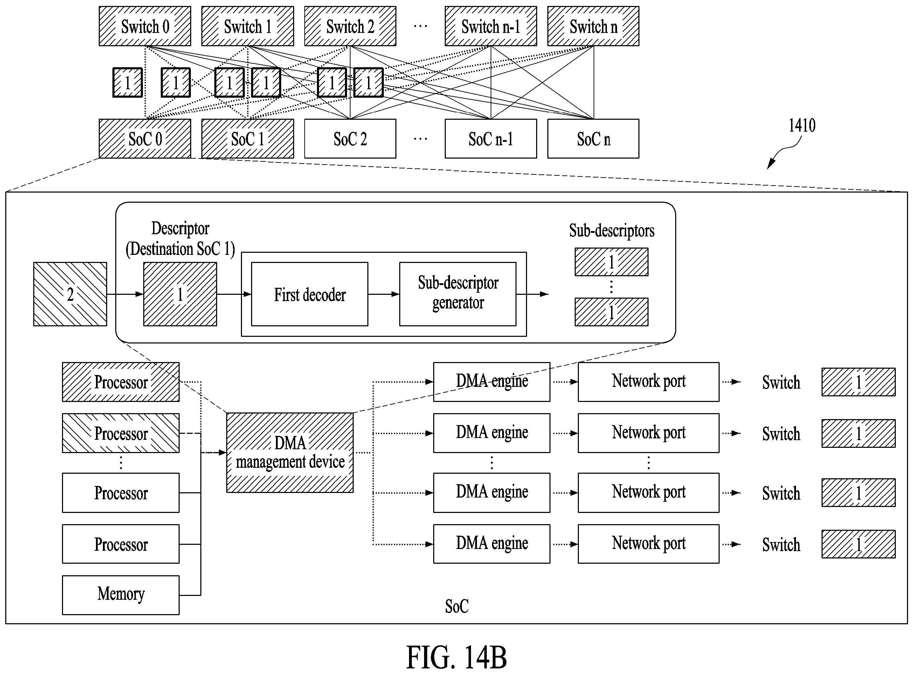

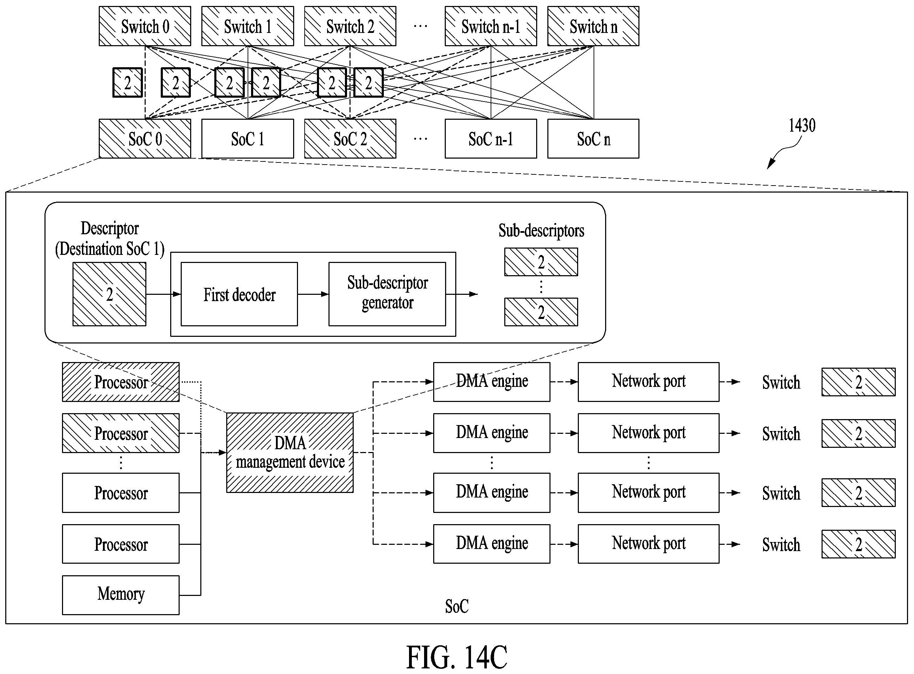

FIGS. 14A, 14B, and 14C illustrate an example of using multiple processors, according to one or more embodiments.

When two processors in an operative/acting SoC are activated to use DMA engines, as shown in diagram 1400 of FIG. 14A, a DMA management device of the operative SoC (SoC 0) may receive descriptors (e.g., a descriptor 1 and a descriptor 2) from two of its processors (shown with hatched shading), respectively, as shown in FIG. 14B. Here, the descriptor 1 and the descriptor 2 may each include their own identification information (e.g., PASID) that distinguishes the processes corresponding executing on their respective processors.

The DMA management device may decode the descriptors (e.g., the descriptor 1 and the descriptor 2) by its first decoder based on the PASIDs included in the respective descriptors and may generate sets of sub-descriptors corresponding to the respective descriptors (e.g., the descriptor 1 and the descriptor 2) by a sub-descriptor generator.

The DMA management device (of SoC 0) may schedule the sets of sub-descriptors respectively corresponding to the descriptors (e.g., the descriptor 1 and the descriptor 2) to its DMA engines. When scheduling is performed on descriptors in the order in which they are received, the DMA management device may perform processing of the descriptor 1 (to SoC 1), as shown in a diagram 1410 of FIG. 14B, and may then perform processing of the descriptor 2 (to SoC 2), as shown in a diagram 1430 of FIG. 14C.

The DMA management device may maximize performance through pipelining in a process between the processing of the descriptor 1 and the processing of the descriptor 2. The DMA management device may maximize network performance by activating multiple DMA engines simultaneously, even when using multiple of the processors.

The DMA management device may fully utilize the DMA engines even when there are multiple descriptors to be transmitted by distinguishing each processor by the PASID included in each descriptor.

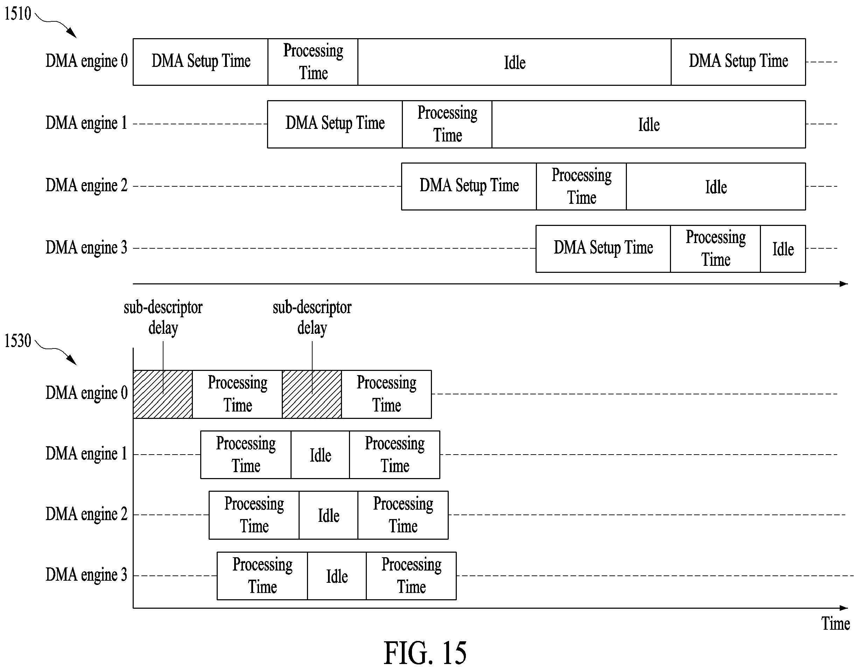

FIG. 15 illustrates an example of a timing diagram when multiple DMA engines are driven without using a DMA management device and when multiple DMA engines are driven by a DMA management device, according to one or more embodiments.

For example, according to an example, when the DMA engines are driven without using a DMA management device, the DMA management device may generate descriptors (DMA descriptors) simultaneously to use the DMA engines. Here, a DMA setup process of transmitting a descriptor to each of the DMA engines may be performed for each DMA engine, as shown in a diagram 1510, and a DMA setup time may increase linearly by the number of DMA engines (i.e., there is no parallel processing of DMA setup). When the DMA management device without sub-descriptor logic is used, idle time due to the DMA setup time increases, so actual throughput in a predetermined time unit may decrease as the number of DMA engines increases.

However, according to an example, when the DMA engines are driven using a DMA management device configured to implement sub-descriptors, the DMA management device may perform processing on sub-descriptors in the DMA engines almost simultaneously after a time equal to sub-descriptor delay required to transmit initial sub-descriptors has elapsed, as shown in a diagram 1530. Here, idle time of the DMA engine may decrease relative to the example of diagram 1510, so utilization of the DMA engines may increase.

In terms of changes in a network bandwidth according to the size of a message (e.g., the descriptor), the smaller the DMA processing time, the greater an effect of increasing the network bandwidth. Therefore, throughput may be maximized in Al workloads that require utilization of the DMA engines.

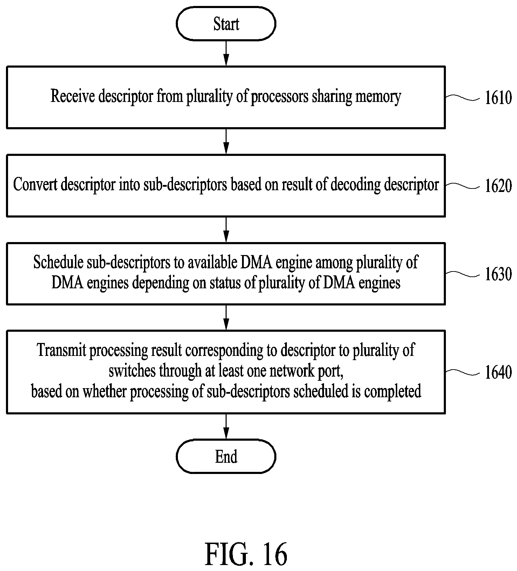

FIG. 16 illustrates an example of a method of operating a DMA management device, according to one or more embodiments.

Referring to FIG. 16, according to an example, in operations 1610 to 1640, the DMA management device may transmit, to multiple switches, a processing result corresponding to a descriptor through a network port.

In operation 1610, the DMA management device may receive a descriptor from processors sharing a memory.

In operation 1620, the DMA management device may divide the descriptor into sub-descriptors based on a result of decoding the descriptor received in operation 1610.

In operation 1630, the DMA management device may schedule the sub-descriptors converted in operation 1620 to an available DMA engine among DMA engines depending on statuses of the respective DMA engines.

In operation 1640, the DMA management device may transmit a processing result corresponding to the descriptor to multiple switches through at least one network port, based on whether processing of the sub-descriptors scheduled in operation 1630 is completed.

The computing apparatuses, the electronic devices, the processors, the memories, the information output system and hardware, the storage devices, and other apparatuses, devices, units, modules, and components described herein with respect to FIGS. 1-16 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-16 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the invention is defined by the enclosed claims.

## Claims

1. A direct memory access, DMA, management device configured to:
decode a descriptor received from any of multiple processors that are sharing a memory and based on the decoding divide the descriptor into sub-descriptors; and
transmit the sub-descriptors to DMA engines and transmit a result of parallel processing to multiple switches through at least one network port.

2. The DMA management device of claim 1, comprising:
a first decoder configured to decode the descriptor, which is received through a work queue; and
a sub-descriptor generator configured to divide the descriptor into the sub-descriptors based on the result of the decoding and generate metadata corresponding to the sub-descriptors.

3. The DMA management device of claim 2, further comprising:
a scheduler configured to schedule the sub-descriptors amongst the DMA engines according to statuses of the respective DMA engines;
a second decoder configured to decode whether processing of the sub-descriptors scheduled amongst the DMA engines is completed and transmit, to the scheduler, an indication that an error has occurred during a processing process of the sub-descriptors; or
a completion checker configured to check whether processing of each of the sub-descriptors is completed and store a result of the checking in a completion queue.

4. The DMA management device of claim 2, wherein the first decoder is further configured to decode a source address, a destination address, and a transfer size included in the descriptor and store a completion status of the decoding in a completion record address included in the descriptor, and/or
wherein the sub-descriptor generator is further configured to determine whether to divide the descriptor into the sub-descriptors or transmit the descriptor to an available DMA engine based on comparing the threshold size to a threshold.

5. The DMA management device of claim 4, wherein the sub-descriptor generator is further configured to determine a subset size of the sub-descriptors based on a number of available DMA engines among the DMA engines; determine the source address and the destination address by adding an offset equal to the subset size; and generate the sub-descriptors by changing the completion record address into a sub-completion record address, or
wherein the sub-descriptor generator is further configured to compare a number of the sub-descriptors to a number of available DMA engines; and in response to the number of the sub-descriptors being greater than or equal to the number of available DMA engines, transmit, to a completion checker, the metadata, the metadata including identification information of the descriptor, a start address and an end address of a sub-completion record, or the number of the sub-descriptors.

6. The DMA management device of claim 2, further comprising:
an address translator configured to convert a source address or a destination address identified through the decoding of the descriptor,
wherein the address translator is preferably configured to set the source address and the destination address according to a target system on chip, SoC; compare a transfer size to a sum of offsets of the source address and the destination address set according to the target SoC; and according to a result of the comparing, set the transfer size by adding an offset corresponding to an address of the target SoC to the transfer size.

7. The DMA management device of claim 3, wherein the scheduler is further configured to determine status information of the plurality of DMA engines as one status of a busy status, a fault status, an error status, a free status, and a retry status, and assign the sub-descriptors to an available DMA engine according to the determined status,
wherein the scheduler is preferably configured to monitor statuses of respective DMA engines based on the status information, which corresponds to the DMA engines, stored in a sub-completion record address.

8. The DMA management device of claim 5, wherein
the second decoder is further configured to transmit, to the scheduler, information of the sub-completion record related to processing completion of the sub-descriptors, information about the error that has occurred during the processing process of the sub-descriptors, or status information of the DMA engines.

9. The DMA management device of claim 3, wherein
the second decoder includes a sub-completion table including information of the sub-completion record, and
the information of the sub-completion record is accessible through a sub-completion record address, which is a completion record address included in the sub-descriptors,
wherein the second decoder is preferably configured to confirm whether processing of the sub-descriptors is completed by looking up the sub-completion table.

10. The DMA management device of claim 3, wherein
the completion checker is further configured to:
synthesize sub-completion records in which processing is completed for each of the sub-descriptors and determine whether processing of the sub-descriptors is normally terminated; and
update the completion queue according to a result of the determining, thereby storing completion record information in a completion record address corresponding to the descriptor.

11. The DMA management device of claim 10, wherein
the completion checker includes a completion check table including identification information of the descriptor, a completion record address corresponding to the descriptor, a start address of the completion record address, an end address of the completion record address, a bitmap representing a completion status corresponding to the sub-descriptors, or a number of sub-descriptors.

12. The DMA management device of claim 11, wherein
the completion checker is further configured to:
calculate an offset of a sub-completion bitmap included in the completion check table using the number of the sub-descriptors for which processing has completed and a sub-completion record address corresponding to the sub-descriptors for which processing has completed, based on whether a sub-completion address corresponding to the sub-descriptors for which processing has completed is included in the start address of the completion record address and the end address of the completion record address;
change information of the sub-completion bitmap according to the offset; and
store completion information corresponding to at least a part of the sub-completion bitmap in the completion record address corresponding to the identification information of the descriptor according to whether the at least a part of the sub-completion bitmap is set.

13. The DMA management device of one of claims 1 to 12, wherein
the processors and the DMA management device are included in an SoC, and
the DMA management device is connected to each of the processors and each of the DMA engines.

14. The DMA management device of one of claims 1 to 13, further comprising switches, wherein
each DMA engine is configured to:
transmit the result of the parallel processing to the switches through a single network port shared by the DMA engines; or
transmit the result of the parallel processing to the switches through network ports respectively corresponding to the DMA engines.

15. A method of operating a direct memory access, DMA, management device, the method comprising:
receiving a descriptor from processors sharing a memory;
dividing the descriptor into sub-descriptors based on a result of decoding the descriptor;
scheduling the sub-descriptors to an available DMA engine among the DMA engines according to statuses of the respective DMA engines; and
transmitting a result of processing corresponding to the descriptor to switches through at least one network port based on whether processing of the scheduled sub-descriptors is completed.
